# EUROPÄISCHE PATENTSCHRIFT

(11) **EP 1 128 979 B1**
(45) Veröffentlichungstag und Bekanntmachung des Hinweises auf die Patenterteilung: **06.10.2004**
(21) Anmeldenummer: 00974359.2
(22) Anmeldetag: 30.08.2000
(51) Int. Cl.: B60N 2/16

(54) **SITZHÖHENEINSTELLER-ANTRIEB FÜR EINEN FAHRZEUGSITZ**
DRIVING MECHANISM OF A HEIGHT ADJUSTMENT DEVICE FOR A VEHICLE SEAT
ENTRAINEMENT DE DISPOSITIF DE REGLAGE DE LA HAUTEUR POUR UN SIEGE DE VEHICULE

(30) Priorität: 09.09.1999 DE 19942995; 06.06.2000 DE 10027866
(43) Veröffentlichungstag der Anmeldung: 05.09.2001
(73) Patentinhaber: KEIPER GmbH & Co. KG, 67657 Kaiserslautern (DE)
(72) Erfinder: MÜHLBERGER, Joachim, 67269 Grünstadt (DE); SCHUMANN, Kai, 66509 Rieschweiler (DE)
(74) Vertreter: Held, Thomas, Dr.
(86) Internationale Anmeldenummer: PCT/EP2000/008434
(87) Internationale Veröffentlichungsnummer: WO 2001/017816

(56) Entgegenhaltungen:
- EP-A- 0 751 030
- DE-A- 3 616 164
- DE-A- 4 400 910
- DE-A- 4 446 741

## Beschreibung

Die Erfindung betrifft einen Sitzhöheneinsteller-Antrieb für einen Fahrzeugsitz. insbesondere für einen Kraftfahrzeugsitz, mit den Merkmalen des Oberbegriffs des Anspruches 1 und einen Fahrzeugsitz mit den Merkmalen des Oberbegriffs des Anspruches 10.

Aus der DE 44 00 910 A1 ist ein Sitzhöheneinsteller-Antrieb dieser Art bekannt. dessen Schrittmechanik für beide Einstellrichtungen symmetrisch eine Pumpbewegung ermöglicht. Dadurch wird eine Welle angetrieben, die wiederum über ein Getriebe das Sitzgestell des Fahrzeugsitzes einstellt. Bei der Pumpbewegung des Hebels erfolgt eine Kraftübertragung mittels eines Mitnehmers, der in Eingriff mit einem Zahnrad steht. Gleichzeitig wird ein Freilauf freigeschaltet, der in der gesperrten Richtung ein Zurückdrehen der Welle verhindert. Da der Hebel manuell betätigt wird, ist aus Gründen der Anatomie des Sitzbenutzers der mögliche Winkelbereich des Hebels in jede Richtung auf etwa 20° bis 25° beschränkt.

Der Erfindung liegt die Aufgabe zu Grunde. einen Sitzhöheneinsteller-Antrieb der eingangs genannten An zu verbessern. Diese Aufgabe wird erfindungsgemäß durch einen Sitzhöheneinsteller-Antrieb mit den Merkmalen des Anspruches 1 und durch einen Fahrzeugsitz mit den Merkmalen des Anspruches 10 gelöst. Vorteilhafte Ausgestaltungen sind Gegenstand der Unteransprüche.

Dadurch, daß die Winkelbereiche für die beiden Einstellrichtungen unterschiedlich groß (also asymmetrisch zur Ruhestellung) sind. steht für eine Einstellrichtung (vorzugsweise die Aufwärtsbewegung) ein größerer Winkelbereich des Hebels zur Verfügung. Dadurch kann im Vergleich zum Stand der Technik bei gleicher Summe der Winkelbereiche wahlweise die Anzahl der notwendigen Hübe des Hebels verringert werden oder die Übersetzung erhöht werden. In letzterem Fall ist eine geringere Hebelkraft aufzubringen, und die Aufnahmefähigkeit gegenüber Crashkräften ist erhöht. Vorzugsweise erfolgt die aufwärts gerichtete Einstellung des Fahrzeugsitzes nach oben durch ein Hochpumpen mittels des Hebels, während die abwärts gerichtete Einstellung des Fahrzeugsitzes nach unten durch ein Runterfahren erfolge das beispielsweise durch den Hebel ausgelöst wird. Das Runterfahren kann dann allein mit Hilfe der Gewichtskraft erfolgen.

Es ist von Vorteil, wenn der Freilauf in zwei Richtungen freischaltbar ist. Ein solcher Freilauf verhindert als Sperre eine ungewollte Drehung einer Welle. Bei der Einstellrichtung mit dem kleineren Winkelbereich (in der Regel die Abwärtsrichtung) kann der Freilauf so freigeschaltet werden, daß der zu bewegende Teil des Sitzhöheneinsteller-Antriebs, beispielsweise eine Welle. mehrere Umdrehungen durchführen kann. Dies ermöglicht das Runterfahren mit Hilfe der Gewichtskraft in einem Zug. Um möglichst einfach herzustellende Bauteile verwenden zu können, weist der Freilauf vorzugsweise sitzstrukturfeste, außen angeordnete Wirkflächen auf. Der Freilauf ist vorzugsweise in beide Drehrichtungen symmetrisch aufgebaut. Um den Freilauf beliebig in die beiden Drehrichtungen freischalten zu können, ist vorzugsweise ein vom Hebel betätigter Schalter vorgesehen, welcher den Freilauf in Richtung der Bewegung des Hebels freischaltet. Um den Freilauf freischalten zu können, weist der Freilauf eine Steuerscheibe auf, die entgegen der Bewegungsrichtung des Hebels zu bewegen ist, um freizuschalten. Der Schalter wirkt vorzugsweise mit einer am Hebel angeordneten Kulissenbahn zusammen. Durch die Kulissenbahn werden die möglichen Winkelbereiche für die Bewegung des Hebels vorgegeben, die dann letztendlich durch Endanschläge definiert werden.

Vorzugsweise ist eine Klinke zum formschlüssigen Antrieb eines Zahnrads vorgesehen. Der Antrieb kann aber auch kraftschlüssig erfolgen, beispielsweise durch einen weiteren Freilauf Bei einer bevorzugten Ausführungsform kann durch Federn, die an der Klinke angreifen, sowohl der Hebel in seiner Ruhestellung gehalten oder in diese zurückgeführt werden als auch die Klinke in Eingriff mit dem Zahnrad gebracht und gehalten werden. Gegenüber dem bekannten Sitzhöheneinsteller-Antrieb kommt dadurch der erfindungsgemaße Antrieb mit einer geringeren Anzahl von Bauteilen zur Festlegung der Ruhestellung des Hebels aus. beispielsweise mit zwei einfachen Zugfedern ohne zusätzliche Bauteile.

Die Klinke ist vorzugsweise durch Anlenken an einen Lenker wenigstens teilweise vom Hebel unabhängig beweglich. Dies ermöglicht einen Vorlauf des Hebels. beispielsweise um den Freilauf freizuschalten. Zugleich kann die Klinke als Ablaufsicherung dienen. d.h. ungewollte Drehungen des Zahnrades aufgrund von schwingenden Belastungen verhindern. In der Ruhestellung kann ein Verbindungsbolzen zwischen Klinke und Lenker am Gehäuse des Sitzhöhreneinstellerantriebs anliegen und die Klinke sich am Hebel abstützen.

Bei einer bevorzugten Ausführungsform ist eine Schling- oder Reibfeder vorgesehen. durch welche die Klinke aus dem Zahnrad aushebbar ist. Dadurch kann das Zurückführen des Hebels geräuschlos erfolgen. d.h. ohne ein sogenanntes "Ratschen". Die Anwendung der Reibfeder ist nicht auf den erfindungsgemäßen Sitzhöheneinsteller-Antrieb beschränkt. Vielmehr kann sie bei jeder Schrittmechanik oder dergleichen angewendet werden, bei der gezahnte Flächen aneinander vorbei geführt werden müssen und dies geräuschlos erfolgen soll. Die Reibfeder öffnet sich beispielsweise bei Mitnahme durch den Lenker. schließt sich bei Kontakt mit der Klinke und ist ansonsten auf ein bestimmtes Maß zugezogen, d.h. sie bewegt sich nicht aufgrund der Reibung gegenüber dem Körper. um den sie geschlungen ist. Je nach geometrischer Ausbildung der Enden der Reibfeder kann die Mitnahme durch den Lenker immer am gleichen Ende oder an dem in Drehrichtung voreilenden Ende erfolgen.

In einer bevorzugten Ausführungsform sind die Schaltelemente zum Schalten des Freilaufs wenigstens teilweise axial zum Freilauf bewegbar. Dadurch können unterschiedliche Freischaltrichtungen des Freilaufs entkoppelt werden. Die Schaltung für den Freilauf wird dann vereinfacht, was die Herstellung kostengünstiger macht. Zudem kann der erforderliche Bauraum verringert werden. Vorzugsweise ist der Freilauf in eine von zwei Drehrichtungen durch eine Bewegung der Schaltelemente rein in Umfangsrichtung (azimuthal) freischaltbar, während er in die andere Drehrichtung durch eine Umlenkung der axialen Bewegung der Schaltelemente in eine Bewegung in gegensinniger Umfangsrichtung freigeschaltet wird. Die Umlenkung erfolgt vorzugsweise durch schräge Flächen. Die freischaltende Bewegung des Freilaufs für die erstgenannte Drehrichtung ist von der axialen Bewegung der Schaltelemente entkoppelt.

Um die axiale Bewegung der Schaltelemente auszulösen. sind vorzugsweise Kugeln vorgesehen, welche in radialer Richtung geführt und in Umfangsrichtung gleichmäßig um die Drehachse des Freilaufs herum angeordnet sind. Die Kugeln sind vorzugsweise in Kulissenbahnen geführt, welche einen in axialer Richtung nicht-konstanten Querschnitt aufweisen. Eine Bewegung der Kugeln in Umfangsrichtung kann dann die gewünschte axiale Bewegung hervorrufen. Aus Verschleißgründen wirken die Kugeln vorzugsweise nicht direkt auf das Teil mit den Schaltelementen. sondern zwischen den Kugeln und den Schaltelementen ist eine flache Druckscheibe angeordnet.

Der Begriff "Sitzhöheneinsteller" soll so zu verstehen sein. daß hierunter auch gemischte Sitzhöhen- und -neigungseinsteller sowie reine Sitzneigungseinsteller fallen. bei denen beispielsweise nur bestimmte Bereiche des Sitzes relativ zu anderen Bereichen des Sitzes ihre Höhe ändern. Der erfindungsgemäße Antrieb entsprechend vielseitig in verschiedenen Fahrzeugsitzen einsetzbar.

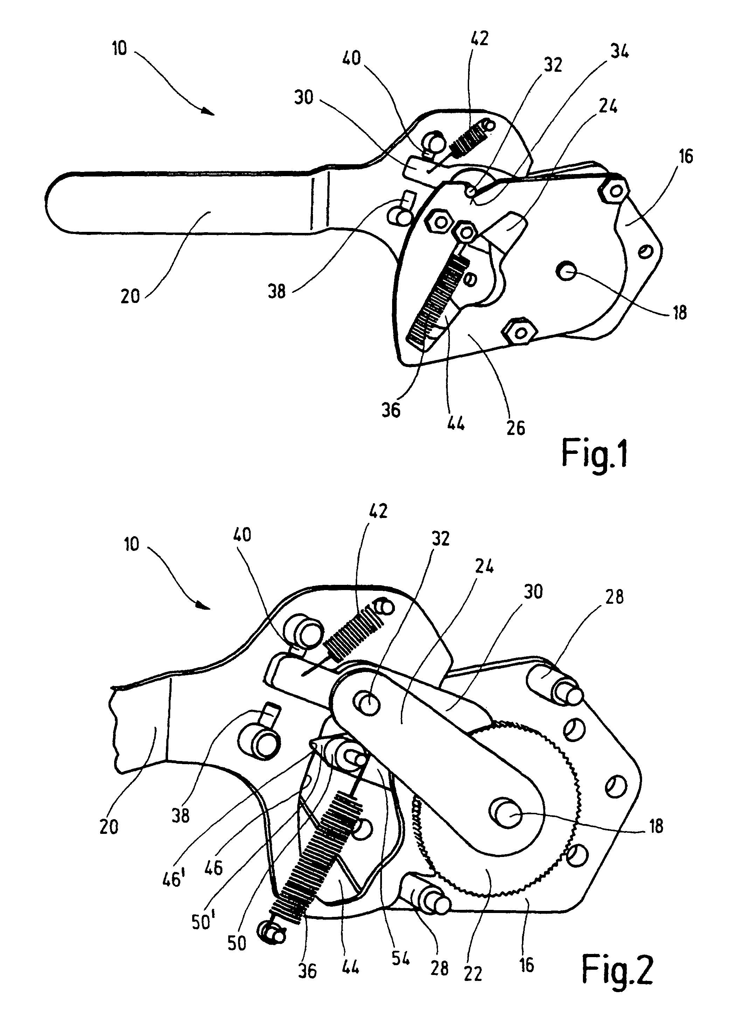

Im folgenden ist die Erfindung anhand von fünf in der Zeichnung dargestellten Ausführungsbeispielen näher erläutert. Es zeigen
- Fig. 1: eine Seitenansicht des ersten Ausführungsbeispiels von der Außenseite des Fahrzeugsitzes her.
- Fig. 2: eine Teilansicht von Fig. 1 ohne Gehäusedeckel,

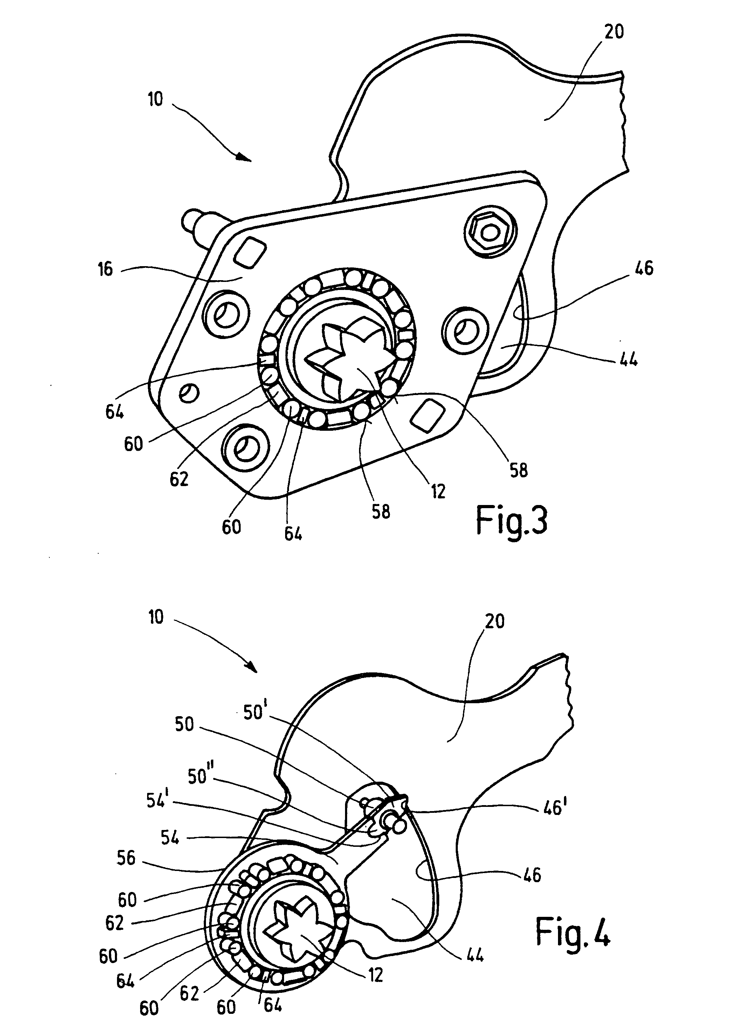

- Fig. 3: eine Teilansicht des ersten Ausführungsbeispiels ohne Gehäusedeckel von der Innenseite des Fahrzeugsitzes her.
- Fig. 4: eine Teilansicht von Fig. 3 ohne Gehäuseplatte. Zahnrad. Klinke und Lenker.

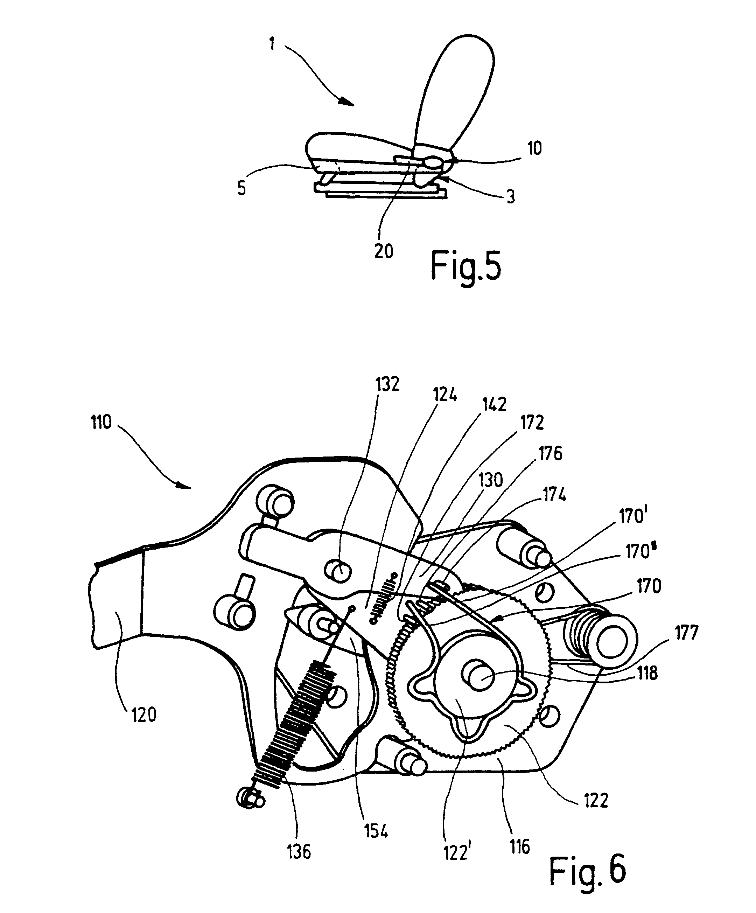

- Fig. 5: eine Seitenansicht eines erfindungsgemäßen Fahrzeugsitzes.
- Fig. 6: eine Teilansicht des zweiten Ausführungsbeispiels entsprechend Fig. 2.
- Fig. 7: eine Teilansicht von Fig. 6 ohne Zahnrad und Reibfeder.
- Fig. 8: eine Abwandlung des zweiten Ausführungsbeispiels.
- Fig. 9: eine Explosionsdarstellung des dritten Ausführungsbeispiels,

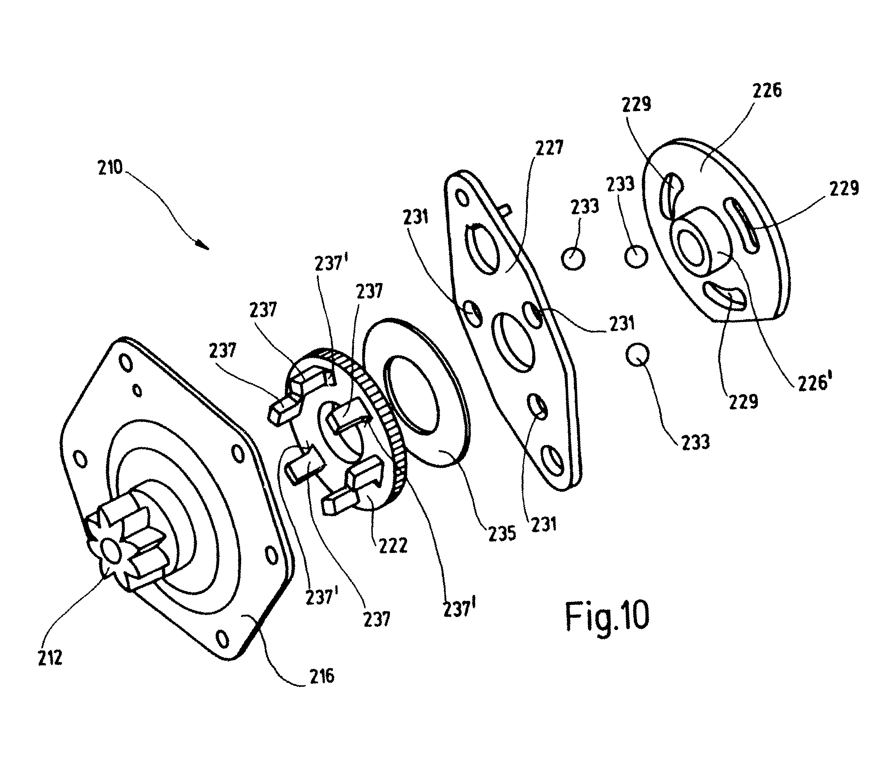

- Fig. 10: eine Explosionsdarstellung des dritten Ausführungsbeispiels aus einer anderen Perspektive.

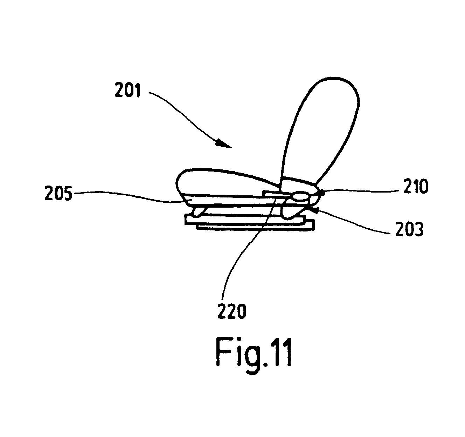

- Fig. 11: eine schematische Seitenansicht eines erfindungsgemäßen Fahrzeugsitzes gemäß dem dritten Ausführungsbeispiel.

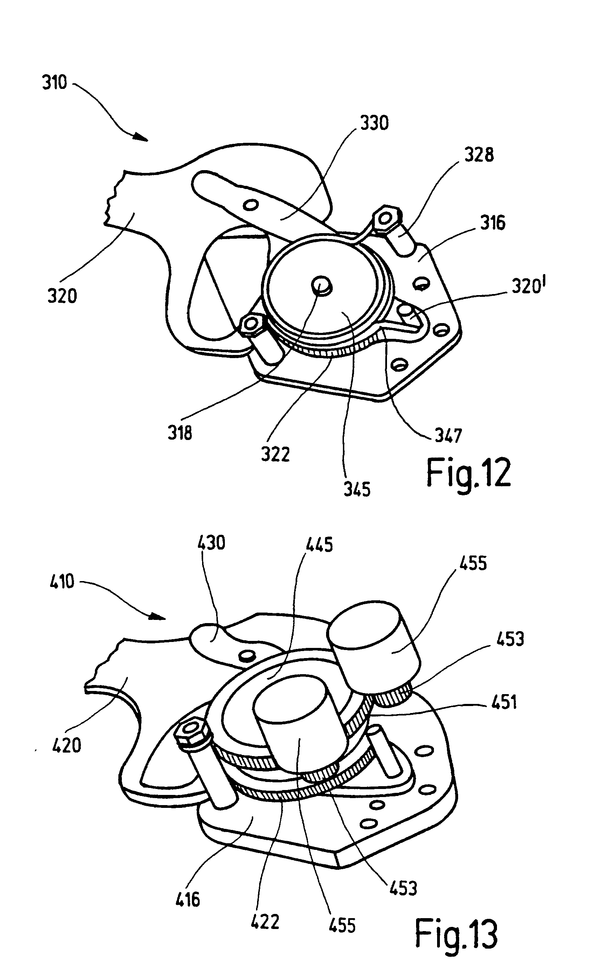

- Fig. 12: eine perspektivische Ansicht von Teilen des vierten Ausführungsbeispiels, und
- Fig. 13: eine perspektivische Ansicht von Teilen des fünften Ausführungsbeispiels.

Beim ersten Ausführungsbeispiel weist ein höheneinstellbarer Fahrzeugsitz 1 eines Kraftfahrzeuges ein Sitzgestell 3 auf. welches mittels eines Sitzhöheneinsteller-Antriebs 10 hinsichtlich der Sitzhöhe manuell stufenlos einstellbar ist. Der Sitzhöheneinsteller-Antrieb 10 weist ein Ritzel 12 auf. das über eine nicht näher dargestellte Welle in Getriebeverbindung mit einem beweglichen Teil des Sitzgestells 3 steht. Das Ritzel 12 ist mit einem einstückig daran ausgebildeten, zylindrischen Abschnitt zusammen mit einem später genauer beschriebenen Freilauf in einer Gehäuseplatte 16 gelagert, welche beispielsweise mit einem Sitzrahmen 5 des Sitzgestells 3 verbunden ist. Durch eine Drehung der Welle relativ zur Gehäuseplatte 16 ändert sich die Sitzhöhe.

Das Ritzel 12 weist einen mit ihm fluchtenden Zapfen 18 an seiner nach außen weisenden Stirnseite auf. Dieser Zapfen 18 steht über die Gehäuseplatte 16 zur Außenseite des Fahrzeugsitzes 1 hin über. Der Zapfen 18 weist auf seiner Länge hintereinander einen ersten glatten Abschnitt. daran anschließend einen gezahnten Abschnitt und an seinem freien Ende einen zweiten glatten Abschnitt auf. Auf dem ersten glatten Abschnitt des Zapfens 18 ist ein Hebel 20 schwenkbar gelagert. Der Hebel 20 steht in Fahrtrichtung nach vorne und ist vom Benutzer des Fahrzeugsitzes 1 aus mit der Hand zugänglich. Auf den gezahnten Abschnitt des Zapfens 18 ist ein Zahnrad 22 geschoben. welches dadurch mit dem Ritzel 12 drehfest verbunden ist. Auf dem zweiten glatten Abschnitt des Zapfens 18 ist ein länglicher Lenker 24 mit einem Ende schwenkbar gelagert. Das Ende des Zapfens 18 ist in einem Gehäusedeckel 26 gelagert, welcher über Abstandsbolzen 28 parallel zur Gehäuseplatte 16 angeordnet und mit dieser fest verbunden ist.

Eine Klinke 30 ist über einen Verbindungsbolzen 32 am anderen Ende des Lenkers 24 angelenkt. Die hebelartig ausgebildete Klinke 30 ist an ihrem hinteren Ende mit nach unten weisenden Zähnen versehen. In der Regel greift die Klinke 30 mit diesen Zähnen von oben her in das Zahnrad 22 ein. Klinke 30 und Zahnrad 22 sind in der gleichen Ebene angeordnet. Der Verbindungsbolzen 32 liegt in der Regel in einer Kuhle 34 des Gehäusedeckels 26 auf dessen Oberseite. Eine untere Feder 36 ist an einem Ende an der Klinke 30 an einer Stelle zwischen dem Verbindungsbolzen 32 und den Zähnen der Klinke 30 und am anderen Ende am Gehäusedeckel 26 angebracht, um den Verbindungsbolzen 32 in Anlage an den Gehäusedeckel 26 und die Klinke 30 in Anlage an das Zahnrad 22 zu halten.

Der Hebel 20 weist einen unteren und einen oberen Mitnehmer 38 bzw. 40 auf. die im Bereich des von den Zähnen abgewandten Endes der Klinke 30 angeordnet sind und beispielsweise durch Bolzen gebildet werden. Eine obere Feder 42 ist an einem Ende an dem von den Zähnen abgewandten Ende der Klinke 30 und am anderen Ende am Hebel 20 angebracht, um die Klinke 30 in Anlage an den oberen Mitnehmer 40 zu halten. Der Hebel 20 wird dadurch und aufgrund der Wirkung der unteren Feder 36 in seiner Ruhestellung gehalten. Der Hebel 20 weist ferner in dem Bereich zwischen seiner Lagerstelle am Zapfen 18 und den Mitnehmern 38 und 40 einen großen Durchbruch 44 auf. dessen vom Zapfen 18 abgewandter Rand als Kulissenbahn 46 ausgebildet ist.

Ein an der Gehäuseplatte 16 angelenkter Schalter 50 weist zwei quer zu seiner Schwenkachse abstehende Nocken 50' und 50" auf. In der Ruhestellung des Schalters 50 befindet sich der Nocken 50' innerhalb einer kleinen. V-förmigen Vertiefung 46' der Kulissenbahn 46. Der gegenüberliegende Nocken 50" greift mit einem seitlichen Zapfen in einen Schlitz 54' eines Armes 54 einer Steuerscheibe 56. Die Steuerscheibe 56 ist auf dem ersten glatten Abschnitt des Zapfens 18 zwischen dem Hebel 20 und der Gehäuseplatte 16 gelagert.

Der Freilauf umfaßt Wirkflächen 58. die an der Gehäuseplatte 16 in der den zylindrischen Abschnitt des Ritzels 12 umschließenden Öffnung auf deren Innenumfang ausgebildet sind und senkrecht oder leicht schräg zum Radius der Öffnung verlaufen. Zwischen der Gehäuseplatte 16 und dem zylindrischen Abschnitt des Ritzels 12 sind in Umfangsrichtung sechs Paare von Bremsrollen 60 angeordnet. Jedes Paar von Bremsrollen 60 ist in Umfangsrichtung des Ritzels 12 im Bereich der beiden Flanken einer Wirkfläche 58 angeordnet. Zwischen zwei Bremsrollen 60 ist abseits der Wirkfläche 58 ein elastisches Element 62 angeordnet. Zur anderen Seite hin ist in Umfangsrichtung zwischen zwei Bremsrollen 60 ein Mitnehmer 64 der Steuerscheibe 56 angeordnet. Die Bremsrollen 60 eines Paares sperren durch Zusammenwirken mit den Wirkflächen 58 in jeweils eine der beiden Drehrichtungen der Welle. Wird der Arm 54 der Steuerscheibe 56 bewegt, also der Freilauf freigeschaltet. so drücken die Mitnehmer 64 jeweils eine Bremsrolle 60 so von der Wirkfläche 58 weg, daß die Welle entgegen der Bewegungsrichtung des Armes 54 der Steuerscheibe 56 gedreht werden kann.

Die Vertiefung 46' der Kulissenbahn 46 ist nicht symmetrisch innerhalb der Kulissenbahn 46 vorgesehen. Vielmehr beträgt bezüglich des Zapfens 18 als Lagerstelle des Hebels 20 der Winkel zwischen der Vertiefung 46' und dem oberen Rand des Durchbruchs 44 etwas mehr als 3° bis 7°, während der Winkel zwischen der Vertiefung 46' und dem unteren Rand des Durchbruchs 44 etwas mehr als 43° bis 47° beträgt. Der Hebel 20 überstreicht daher in den beiden unterschiedlichen Schwenkrichtungen unterschiedlich große Winkelbereiche und führt dadurch unterschiedlich große Hübe aus. Zwei der Abstandsbolzen 28 zwischen der Gehäuseplatte 16 und dem Gehäusedeckel 26 sind so angeordnet. daß bei einer Bewegung des Hebels 20 dieser zuerst an die als Endanschläge wirkenden Abstandsbolzen 28 gelangt, bevor der Schalter 50 an den Rand des Durchbruchs 44 gelangt.

Wird der Hebel 20 aus der Ruhestellung heraus manuell nach oben gezogen. wird der Nokken 50' des Schalters 50 durch die Kulissenbahn 46 mitgenommen. so daß der Schalter 50 in die gleiche Richtung wie der Hebel 20 schwenkt. Durch die Schwenkbewegung des Schalters 50 und dessen weiteren Nocken 50" wird über die Schlitz-Zapfen-Verbindung der Arm 54' der Steuerscheibe 54 bewegt. Die Steuerscheibe 54 dreht sich entgegen dem Hebel 20 und löst dadurch über ihre Mitnehmer 64 diejenigen Bremsrollen 60 des Freilaufs. welche zusammen mit den Wirkflächen 58 in der Schwenkrichtung des Hebels 20 sperren. schaltet also den Freilauf frei.

Der Hebel 20 kann nun einen großen Hub durchführen. Der Schalter 50 bleibt in seiner geschwenkten Stellung und gleitet an der Kulissenbahn 46 entlang. Der Hebel 20 nimmt nun über seinen unteren Mitnehmer 38 die Klinke 30 mit. Der Verbindungsbolzen 32 löst sich aus der Kuhle 34. Da die Klinke 30 über den Lenker 24 am gleichen Zapfen 18 angelenkt ist, auf dem das Zahnrad 22 sitzt. und in Eingriff mit dem Zahnrad 22 steht. dreht die Klinke 30 formschlüssig das Zahnrad 22 ein Stück weit in die Schwenkrichtung des Hebels 20. Die mit dem Zahnrad 22 in Eingriff stehende Welle dreht sich entsprechend weit in die gleiche Richtung. d.h. der Sitzhöheneinsteller-Antrieb 10 bewegt das Sitzgestell 3 aufwärts.

Sobald der Hebel 20 nach dem großen Hub an einem der Abstandsbolzen 28 zwischen Gehäuseplatte 16 und Gehäusedeckel 26 anschlägt, muß der Hebel 20 anschließend zurückgeführt werden, also wieder nach unten bewegt werden. Der Freilauf verhindert, daß die Welle sich unter dem abtriebsseitig wirkenden Moment aufgrund des Gewichtes aus der erreichten Stellung zurückdreht. Die Klinke 30 kann sich vom unteren Mitnehmer 38 lösen. Der Verbindungsbolzen 32 wird wieder zur Kuhle 34 hin bewegt. Sobald der Nocken 50' des Schalters 50 in die Vertiefung 46' der Kulissenbahn 46 gelangt, dreht sich der Schalter 50 zurück. Dadurch wird der Arm 54' der Steuerscheibe 54 zurück bewegt. welche über eine Verschiebung der Bremsrollen 60 den Freilauf sperrt. Dieser sperrt wiederum die Welle auch in die soeben angetriebene Richtung. Durch mehrmalige Wiederholung der beschriebenen Bewegungsabläufe ergibt sich eine Pumpbewegung, um das Sitzgestell 3 anzuheben.

Wird der Hebel 20 aus der Ruhestellung heraus manuell nach unten gedrückt, wird der Schalter 50 ebenfalls in diese Richtung gedreht. Über die Schlitz-Zapfen-Verbindung wird wieder der Arm 54' der Steuerscheibe 54 geschwenkt. welcher wiederum den Freilauf in Richtung der Schwenkbewegung des Hebels 20 löst. Der Hebel 20 kann aufgrund des kürzeren Teils des Kulissenbahn 46 nur einen kleinen Hub durchführen. Dabei gelangt der Hebel 20 mit seinem oberen Mitnehmer 40 in Anlage an die Klinke 30. Da der Verbindungsbolzen 32 in der Kuhle 34 liegt. beginnt die Klinke 30 mit einer Schwenkbewegung um den Verbindungsbolzen 32. Die Klinke 30 löst sich dadurch vom Zahnrad 22. wodurch die Welle sich drehen kann. Aufgrund des Gewichtes des Fahrzeugsitzes 1 und des Sitzbenutzers sinkt das Sitzgestell 3 abwärts. Sobald der Hebel 20 wieder losgelassen wird. gehen die Bauteile wieder in ihre Ausgangsstellung zurück. Insbesondere sperrt die Steuerscheibe 54 wieder den Freilauf. und die Klinke 30 gelangt in Eingriff mit dem Zahnrad 22.

Ein Sitzhöheneinsteller-Antrieb 110 des zweiten Ausführungsbeispiels stimmt im wesentlichen mit dem ersten Ausführungsbeispiel überein. Gleiche Bauteile, wie beispielsweise die Gehäuseplatte 116, sind daher mit um 100 höheren Bezugszeichen versehen. Bezüglich der Anordnung der Bauteile besteht ein Unterschied darin, daß der Lenker 124 zwischen dem Hebel 120 und dem Zahnrad 122 auf dem Zapfen 118 angeordnet ist. Die in der gleichen Ebene wie das Zahnrad 122 befindliche Klinke 130 ist am Lenker 124 angelenkt. Die untere Feder 136 greift am Lenker 124 an, während die obere Feder 142 zwischen Lenker 124 und Klinke 130 wirkt. Der Aufbau der Freilaufs und seine Schaltung über den Hebel 120 mittels des Schalters 150 stimmt mit dem ersten Ausführungsbeispiel überein.

Eine Reibfeder 170 (oder Schlingfeder) ist einmal (oder mehrmals) um einen Absatz 122' des Zahnrades 122 geschlungen. Das vordere Ende 170' der Reibfeder 170 und das daneben angeordnete, hintere Ende 170" der Reibfeder 170 sind von diesem Absatz 122' des Zahnrades 122 radial nach außen gebogen. Ferner weist die Reibfeder 170 entlang dieser Schlinge drei radial nach außen weisende Ausbuchtungen auf. die eine flache Kennlinie der Reibfeder 170 realisieren. damit diese bei entsprechender Vorspannung toleranzunempfindlich ist. Weiterhin wird durch die Ausbuchtungen die Anlage der Reibfeder 170 besser definiert. Die am besten definierte Anlage wird erreicht. wenn die Schlinge der Reibfeder 170 eine Polygonform aufweist und mit Linienberührung am Absatz 122' des Zahnrades 122 anliegt.

Soll der Sitzhöheneinsteller-Antrieb 110 aufwärts wirken, wird der Hebel 120 zunächst nach oben bewegt. wobei er die Klinke 130 mitnimmt. Wenn die Klinke 130 sich im Eingriff mit dem Zahnrad 122 befindet, dreht die Klinke 130 das Zahnrad 122, welches mit seinem Absatz 122' die Reibfeder 170 über Reibschluß mitnimmt, und den Lenker 124. der über einen ersten Anschlag 172 ebenfalls die Reibfeder 170 über ihr hinteres Ende 170" mitnimmt. Wenn die Klinke 130 in der Ruhestellung nicht in das Zahnrad 122 eingefallen ist. steht der Lenker 124 noch nicht mit der Reibfeder 170 in Kontakt, d.h. die Reibfeder 170 bleibt stehen und die Klinke 130 fällt ein. Ist die Klinke 130 eingefallen, nimmt sie über das Zahnrad 122 und dessen Absatz 122' die Reibfeder 170 mit. und der Lenker 124 kommt mit seinem ersten Anschlag 172 in Anlage an die Reibfeder 170 und nimmt diese zusätzlich mit.

Sobald sich die Richtung des Hebels 120 ändert, d.h. wenn der Hebel 120 zurückgeführt wird, löst sich der über die untere Feder 136 vorgespannte Lenker 124 mit seinem ersten Anschlag 172 vom hinteren Ende 170" der Reibfeder 170. Das vordere Ende 170' der Reibfeder 170 drückt über einen zweiten Anschlag 174 auf die Klinke 130. Hierbei wird gleichzeitig das Reibmoment der Reibfeder 170 erhöht, indem sich die Schlinge der Reibfeder 170 zuzieht, d.h. die Reibfeder 170 sich weiter schließt.

Die Klinke 130 schwenkt um den Verbindungsbolzen 132 und wird aus dem Zahnrad 122 ausgehoben. Durch die geometrische Ausgestaltung des vorderen Endes 170' der Reibfeder kann die Aushebekinematik eingestellt werden. Das Ausheben der Klinke 130 wird dadurch begrenzt. daß der Lenker 124 mit einem dritten Anschlag 176 in Kontakt mit dem hinteren Ende 170" der Reibfeder 170 gelangt und diese mitnimmt. Hierbei wird gleichzeitig das Reibmoment der Reibfeder 170 durch Aufbiegen der Schlinge der Reibfeder 170, d.h. durch weiteres Öffnen der Reibfeder 170, verringert. Dies erleichtert das Zurückführen des Hebels 120.

Die untere Feder 136 führt den Lenker 124 in seine Ausgangsstellung zurück, während die Klinke 130 außer Eingriff bleibt. Dadurch wird eine Geräuschbildung durch das Entlangbewegen der Klinke 130 am Zahnrad 122 (..Ratschen") vermieden. Beginnt der Freilauf abzulaufen, so gleitet die Reibfeder 170 mit ihrem vorderen Ende 170' von der Klinke 130.

Die Klinke 130 wird durch die obere Feder 142 wieder mit dem Zahnrad 122 in Eingriff gebracht und wirkt dann als Ablaufsicherung. Eine Schenkelfeder 177 bringt den Hebel 120 in die definierte Ruhestellung zurück. Dabei liegen die gegeneinander vorgespannten Schenkel der Schenkelfeder 177 jeweils an einem vierten und fünften Anschlag 178 bzw. 179 der Gehäuseplatte 116 und am Hebel 120 an.

Die obere Feder 142 hält. abgestützt gegen den Lenker 124, die Klinke 130 in Eingriff mit dem Zahnrad 122, sofern sie nicht durch die Reibfeder 170 oder den Hebel 120 ausgehoben wird. Damit die Klinke 130 von der Reibfeder 170 ausgehoben werden kann, ist das Moment der Reibfeder 170 höher als das durch die obere Feder 142 an der Klinke 130 entstehende Moment am Eingriffspunkt. Die untere Feder 136 zieht den Lenker 124 zusammen mit der Klinke 130 gegen das Reibmoment der Reibfeder 170 zurück. bis der Verbindungsbolzen 132 in der Kuhle des Gehäusedeckels liegt. Die untere Feder 136 ist deshalb so ausgelegt, daß sie jederzeit ein höheres Moment um den Zapfen 118 erzeugt als die Reibfeder 170.

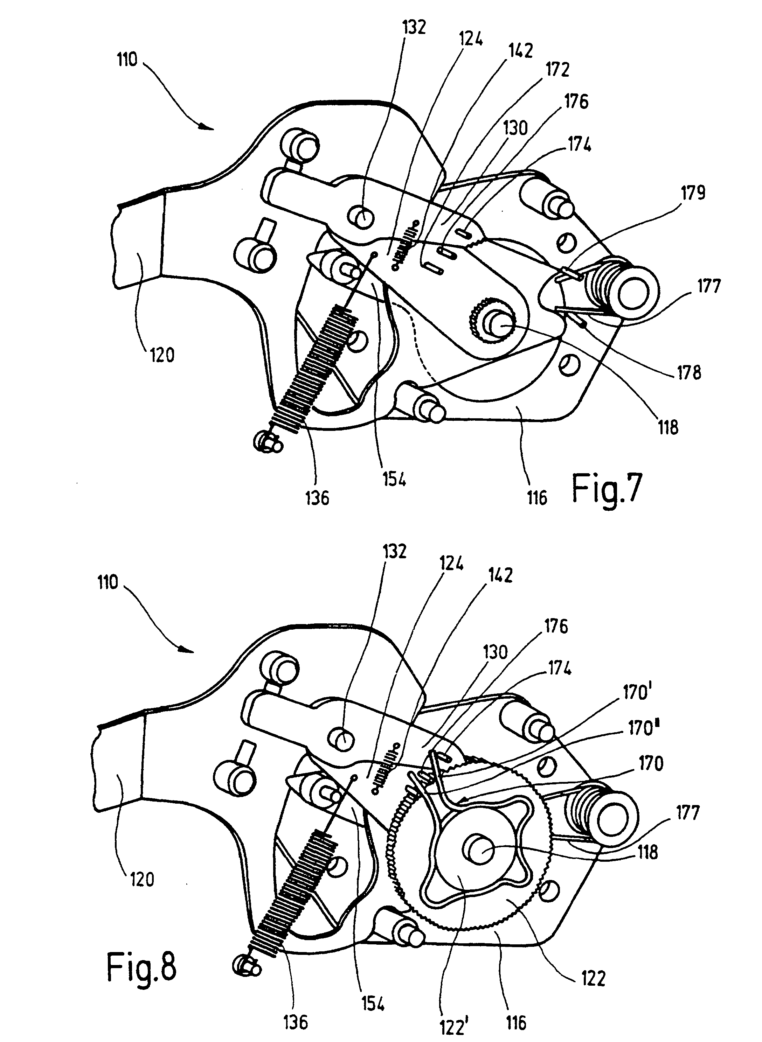

In einer abgewandelten Ausführungsform hierzu gemäß Fig. 8 entfällt der erste Anschlag 172, und der Lenker 124 nimmt mit dem dritten Anschlag 176 je nach Drehrichtung das vordere bzw. das hintere Ende 170' bzw. 170" der Reibfeder 170 mit. Bei der Mitnahme wird die Reibfeder 170 geöffnet. so daß das zu überwindende Moment durch Reibung verringert wird. Beim Ausheben der Klinke 130 wird die Reibfeder 170 zugezogen. so daß sich die der Abstützung dienende, gewünschte Reibung erhöht. Die Verringerung des Moments erfolgt bei dieser Abwandlung in beide Drehrichtungen.

Im dritten Ausführungsbeispiel weist ein höheneinstellbarer Fahrzeugsitz 201 eines Kraftfahrzeuges ein Sitzgestell 203 mit einem Sitzrahmen 205 auf. Das Sitzgestell 203 ist mittels eines Sitzhöheneinsteller-Antriebs 210 - hinsichtlich der Sitzhöhe - manuell stufenlos einstellbar. Der Sitzhöheneinsteller-Antrieb 210 weist ein Ritzel 212 auf. das über eine nicht näher dargestellte Welle in Getriebeverbindung mit einem beweglichen Teil des Sitzgestells 203 steht. Das Ritzel 212 weist an seiner nach außen weisenden Stirnseite einen einstückig daran ausgebildeten. zylindrischen. mit der Drehachse des Ritzels 212 fluchtenden Zapfen 218 auf. Der Zapfen 218 ist in einer Gehäuseplatte 216 und einem später beschriebene Gehäusedeckel 226 gelagert und wird über einen Freilauf geschaltet. d.h. freigegeben oder gesperrt. Die Orientierung des Ritzels 212 samt Zapfens 218 bestimmt die nachfolgenden Richtungsangaben. Die Gehäuseplatte 216 ist beispielsweise mit dem Sitzrahmen 205 des Sitzgestells 203 verbunden. Durch eine Drehung der Welle relativ zur Gehäuseplatte 216 ändert sich die Sitzhöhe.

Der Freilauf ist in einem Freilaufgehäuse 214 angeordnet, welches durch eine Kerbverzahnung drehfest mit dem Zapfen 218 in Verbindung steht. Der Zapfen 218 steht mit seinem vom Ritzel 212 abgewandten. freien Ende über das Freilaufgehäuse 214 über. Der Zapfen 218 weist in dem überstehenden Bereich hintereinander einen zylindrischen, ersten Abschnitt mit größerem Durchmesser und daran anschließend an seinem freien Ende einen ebenfalls zylindrischen, zweiten Abschnitt mit kleinerem Durchmesser auf. Auf dem ersten Abschnitt des Zapfens 218 ist ein gezahntes Mitnehmerrad 222 drehbar gelagert. Der zweite Abschnitt des Zapfens 218 ist in einem ringförmigen Flanschabschnitt 226' des Gehäusedeckels 226 gelagert. wobei auf dem Flanschabschnitt 226' ein zweiarmiger Handhebel 227 schwenkbar gelagert ist. Der einstückig am Gehäusedeckel 226 ausgebildete Flanschabschnitt 226' kann zusammen mit dem ersten Abschnitt des Zapfens 218 ein durchgängiges Lager von konstantem Durchmesser bilden.

Der näherungsweise scheibenförmige Gehäusedeckel 226 ist relativ zur Gehäuseplatte 216 fest angeordnet. Der Gehäusedeckel 226 weist in seinem radial äußeren Bereich, in Umfangsrichtung gleichmäßig verteilt. drei Kulissenbahnen 229 auf. Die Kulissenbahnen 229 weisen in Umfangsrichtung am jeweils entsprechend gleichen Ende einen Querschnitt auf. der sich in der vom Handhebel 227 abgewandten axialen Richtung verjüngt. Der Handhebel 227 weist in dem radial um den Flanschabschnitt 226' herum gelegenen Bereich. in Umfangsrichtung gleichmäßig verteilt. drei durchgängige, zylindrische Bohrungen als Kugelführungen 231 auf. Innerhalb jeder dieser Kugelführungen 231 ist eine Kugel 233 angeordnet, weiche auf der dem Gehäusedeckel 226 zugewandten Seite innerhalb jeweils einer Kulissenbahn 229 zu liegen kommt.

Zwischen dem Mitnehmerrad 222 und dem Handhebel 227 ist eine ringförmige Druckscheibe 235 angeordnet. welche radial außen so abgestützt ist. daß sie axial verschiebbar. aber nicht um ihre Symmetrieachse drehbar ist. Die Druckscheibe 235 liegt in axialer Richtung auf einer Stirnseite am Mitnehmerrad 222 und auf der anderen Stirnseite an den drei Kugeln 233 an. Die Druckscheibe 235 verhindert einen Verschleiß des Mitnehmerrades 222 durch die Kugeln 233. indem die Relativbewegung zwischen Druckscheibe 235 und Mitnehmerrad 222 flächig erfolgt. Das Mitnehmerrad 222 weist in axialer Richtung von derjenigen Stirnseite abstehend, welche der Gehäuseplatte 216 zugewandt ist. sechs säulenförmige Mitnehmerarme 237 auf. Jeder Mitnehmerarm 237 ist im Übergangsbereich zur Scheibe des Mitnehmerrades 222 mit einer schräg zum Mitnehmerarm 237 geneigten Keilfläche 237' versehen. Alle sechs Keilflächen 237' weisen in Umfangsrichtung in die gleiche Richtung. Die Mitnehmerarme 237 sind durch entsprechende Öffnungen im Freilaufgehäuse 214 gesteckt. Ein Federelement 239 zwischen dem Mitnehmerrad 222 und dem Freilaufgehäuse 214 drückt das Mitnehmerrad 222 in die Ausgangsposition. d.h. so, daß die Keilflächen 237' sich wieder außerhalb des Freilaufgehäuses 214 befinden.

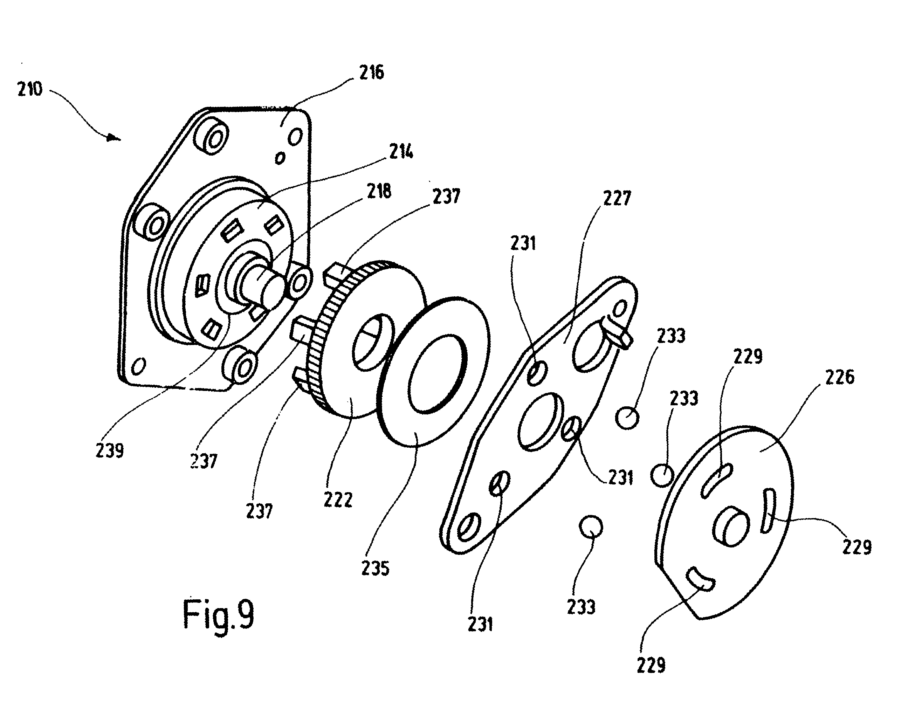

Der Sitzhöheneinsteller-Antriebs 210 wird mittels eines nur schematisch dargestellten Betätigungshebels 220 betätigt, wobei zum Anheben des Sitzgestells 203 ein "Hochpumpen" und zum Absenken ein "Runterfahren" erfolgt. Beim "Hochpumpen" schwenkt der Betätigungshebel 220 aus einer Ausgangsposition heraus nach oben zunächst den Handhebel 227, an welchem eine nicht dargestellte Klinke in der in Fig. 9 am unteren Ende des Handhebels 227 dargestellten Bohrung gelagert ist. Die Klinke gelangt dadurch in Eingriff mit der Außenverzahnung des Mitnehmerrades 222 und dreht dieses (in Fig. 9 im Gegenuhrzeigersinn). Über die Mitnehmerarme 237 wird der Freilauf in die Drehrichtung freigeschaltet und nach einem kleinen Leerhub das Freilaufgehäuse 214 mitgenommen. Das Freilaufgehäuse 214 bewegt über den Zapfen 218 das Ritzel 212. das wiederum die Welle dreht, welche das Sitzgestell 203 anhebt. Der Betätigungshebel 220 wird dann zurückgeschwenkt. wobei der Handhebel 227 zurückgeführt und die Klinke ausgehoben und relativ zum Mitnehmerrad 222 in Umfangsrichtung verschoben wird. Diese Bewegungsabläufe werden entsprechend oft wiederholt. Es erfolgt dabei keine axiale Bewegung des Mitnehmerrades 222.

Zum "Runterfahren" wird über den nach unten schwenkenden Betätigungshebel 220 der Handhebel 227 geschwenkt. Die Kugeln 233 in ihren Kugelführungen 231 gelangen dadurch in den Endbereich der Kulissenbahnen 229. welcher so verjüngt ist. daß die Kugeln 233 in axialer Richtung zur Druckscheibe 235 gedrückt werden. Die Druckscheibe 235 wiederum drückt auf das Mitnehmerrad 222, welches entgegen der Kraft des Federelementes 239 tiefer in das Freilaufgehäuse 214 gedrückt wird. Aufgrund der Keilflächen 237' vollführt das Mitnehmerrad 222 mit seinen Mitnehmerarmen 237 zusätzlich zu der axialen Bewegung noch eine Bewegung in Umfangsrichtung (in Fig. 9 im Uhrzeigersinn). mit welcher es den Freilauf in diese neue Richtung freischaltet. Das Ritzel 212 mit der Welle kann sich dann drehen. Aufgrund des Gewichtes des Fahrzeugsitzes 201 und des Sitzbenutzers sinkt das Sitzgestell 203 abwärts. Ein Anschlag. beispielsweise für den Handhebel 227. oder das Ende der Kulissenbahnen 229. verhindert. daß das Mitnehmerrad 222 in seiner Endstellung in Kontakt mit dem Freilaufgehäuse 214 kommt, so daß übermäßige axiale Druckkräfte vermieden werden.

Das vierte Ausführungsbeispiel betrifft einen Sitzhöheneinsteller-Antrieb 310, der dem ersten Ausführungsbeispiel gleicht, soweit nicht nachfolgend anders beschrieben. Gleiche oder gleichwirkende Bauteile tragen daher um 300 höhere Bezugszeichen. Wie in den anderen Ausführungsbeispielen steht ein in einer Gehäuseplatte 316 gelagerter Zapfen 318 in drehfester Verbindung mit einer vom Sitzhöheneinsteller-Antrieb 310 anzutreibenden Welle, wobei ein Hebel 320 ein auf dem Zapfen 318 drehfest gelagertes Zahnrad 322 mittels einer schwenkbaren Klinke 330 antreibt. Der vorhandene Freilauf. welcher den Zapfen 318 gegenüber der Gehäuseplatte 316 sperrt oder freigibt. und die Bauteile für seine Freischaltung sind in der Zeichnung nicht dargestellt.

Am Zapfen 318 ist konzentrisch und drehfest eine kreiszylindrische Scheibe 345 angebracht, um deren Mantelfläche eine Schlingfeder 347 geschlungen ist. Der Innendurchmesser der unverbauten Schlingfeder 347 ist etwas kleiner als der Durchmesser der Scheibe 345, so daß die Schlingfeder mit Vorspannung an der Scheibe 345 anliegt. Ein Ende der Schlingfeder 347 ist an der Gehäuseplatte 316 angebracht oder fest abgestützt. beispielsweise an einem der Abstandsbolzen 328. Das andere Ende der Schlingfeder 347 liegt frei an einem Anschlagszapfen 320' an. welcher am Hebel 320 befestigt ist.

Beim Runterfahren dämpft die zugezogene Schlingfeder 347 über die Reibung an der Scheibe 345 die Drehung des Zapfens 318. d.h. sie bremst die Bewegung des Sitzhöheneinsteller-Antriebs 310. Durch eine Anpassung der Vorspannung und/oder eine geeignete Werkstoffpaarung wird ein definiertes Durchrutschen des so gebildeten Reibdämpfers erreicht. Wird zum Hochpumpen der Hebel 320 nach oben geschwenkt, wird die Schlingfeder 347 über den Anschlagszapfen 320' aufgedrückt. so daß die Scheibe 345 und damit der Zapfen 318 ungedämpft gedreht werden kann.

Das fünfte Ausführungsbeispiel betrifft einen Sitzhöheneinsteller-Antrieb 410. der in Aufbau und Funktion im wesentlichen dem vierten Ausführungsbeispiel gleicht. so daß gleiche oder gleichwirkende Bauteile um 100 höhere Bezugszeichen tragen. Wie in den anderen Ausführungsbeispielen trägt ein in einer Gehäuseplatte 416 gelagerter Zapfen drehfest ein Zahnrad 422. welches von einem Hebel 420 mittels einer schwenkbaren Klinke 430 angetrieben wird. Auf dem in Rede stehenden, in der Zeichnung nicht dargestellten Zapfen ist eine Scheibe 445 mit einer Außenverzahnung 451 auf der Mantelfläche angebracht. Diese Außenverzahnung 451 steht in Eingriff mit je einem Kopplungszahnrad 453 von zwei Viskosedämpfern 455.

Die Viskosedämpfer 455 dämpfen als geschwindigkeitsabhängige Bremsen die Bewegung ihres jeweiligen Kopplungszahnrades 453 und über die Getriebeverbindung damit diejenige des Sitzhöheneinsteller-Antriebs 410. Die Gehäuse der Viskosedämpfer 455 sind beispielsweise am nicht dargestellten Gehäusedeckel befestigt. Die Viskosedämpfer 455 können mit einer magnetorheologischen Flüssigkeit gefüllt sein, deren Viskosität spannungsabhängig veränderlich ist. also schaltbar ist. Die Gehäuse der Viskosedämpfer 455 können auch auf schwenkbaren Armen angebracht sein. so daß sie von der Scheibe 445 weggeschwenkt werden können. um die Dämpfung abzuschalten.

Der Viskosedämpfer 455 kann einseitig oder beidseitig wirksam sein. direkt auf der Welle oder - wie im Ausführungsbeispiel gezeigt - mit dazwischen geschalteter Übersetzung arbeiten.

## Patentansprüche

1. Sitzhöheneinsteller-Antrieb für einen Fahrzeugsitz, insbesondere für einen Kraftfahrzeugsitz, mit einem manuell betätigbaren Hebel (20; 120; 220; 320; 420), der aus einer Ruhestellung heraus innerhalb zweier den beiden Einstellrichtungen entsprechenden Winkelbereichen bewegbar ist, um einen Teil (12; 212) des Sitzhöheneinsteller-Antriebs (10; 110; 210; 310; 410) in eine Richtung zu drehen, und mit einem freischaltbaren Freilauf (54, 58, 60, 62, 64; 214) zum Sperren des zu drehenden Teils (12; 212), **dadurch gekennzeichnet, daß** die Winkelbereiche für die beiden Einstellrichtungen unterschiedlich groß sind, wobei die Bewegung des Hebels (20; 120; 220; 320; 420) in Richtung des kleineren Winkelbereichs den Freilauf freischaltet, um eine abwärts gerichtete Einstellung des Fahrzeugsitzes mit Hilfe der Grewichtskraft aus zu lösen.

2. Sitzhöheneinsteller-Antrieb nach Anspruch 1, **dadurch gekennzeichnet, daß** der Freitauf (54,58,60,62,64; 214) in zwei Richtungen (10; 110; 210; 310; 410) freischaltbar ist.

3. Sitzhöheneinsteller-Antrieb nach Anspruch 2. **dadurch gekennzeichnet, daß** ein Schalter (50; 150) vorgesehen ist, welcher den Freilauf (54,58,60,62,64) in Richtung der Bewegung des Hebels (20; 120) freischaltet, wobei der Schalter (50; 150) mit einer am Hebel (20; 120) angeordneten Kulissenbahn (46) zusammenwirkt und eine Steuerscheibe (56) des Freilaufs (54,58.60.62,64) entgegen der Bewegung des Hebels (20; 120) bewegt

4. Sitzhöheneinsteller-Antrieb nach einem der Ansprüche 1 bis 3. **dadurch gekennzeichnet, daß** eine Klinke (30; 130; 330; 430) zum Antrieb eines Zahnrads (22; 122; 222; 322; 422) vorgesehen ist, welche durch Anlenkung an einem Lenker (24; 124; 227) wenigstens teilweise vom Hebel (20; 120; 220; 320; 420) unabhängig beweglich ist.

5. Sitzhöheneinsteller-Antrieb nach Anspruch 4. **dadurch gekennzeichnet, daß** eine Reibfeder (170) vorgesehen ist, durch welche die Klinke (130) aus dem Zahnrad (122) aushebbar ist und die sich bei Mitnahme durch den Lenker (124) öffnet und sich bei Kontakt zur Klinke (130) schließt.

6. Sitzhöheneinsteller-Antrieb nach Anspruch 2 oder 3. **dadurch gekennzeichnet. daß** der Freilauf (54, 58, 60, 62. 64; 214) zwischen einem gespemen und wenigstens einem freigeschalteten Zustand durch Schaltelemente (237) schaltbar ist, welche zum . Schalten des Freilaufs wenigstens teilweise axial zum Freilauf bewegbar sind.

7. Sitzhöheneinsteller-Antrieb nach Anspruch 6. **dadurch gekennzeichnet, daß** der Freilauf (54, 58, 60, 62, 64; 214) in wenigstens eine Drehrichtung durch eine Umlenkung der axialen Bewegung der Schaltelemente (237) in eine Bewegung in Umfangsrichtung freigeschaltet wird.

8. Sitzhöheneinsteller-Antrieb nach Anspruch 6 oder 7, **dadurch gekennzeichnet, daß** zur Auslösung der axialen Bewegung der Schaltelemente (237) Kugeln (233) vorgesehen sind, welche in Kulissenbahnen (229) geführt sind. die einen in axialer Richtung nicht-konstanten Querschnitt aufweisen.

9. Sitzhöheneinsteller-Antrieb nach einem der Ansprüche 1 bis 8, **dadurch gekennzeichnet. daß** Mittel (347; 455) zur Dämpfung der Bewegung des Sitzhöheneinsteller-Antriebs (310; 410) in wenigstens eine Einstellrichtung vorgesehen sind.

10. Fahrzeugsitz (1; 201) mit einem höheneinstellbaren und/oder neigungseinstellbaren Sitzgestell (3; 203) und einem Sitzhöheneinsteller-Antrieb (10; 110; 210; 310; 410) nach einem der Ansprüche 1 bis 9.

## Claims

1. Seat height adjuster drive for a vehicle seat, in particular for a motor vehicle seat, having a manually actuatable lever (20; 120; 220; 320; 420) which can be moved out of a rest position within two angular ranges which correspond to the two adjustment directions in order to rotate a component (12; 212) of the seat height adjuster drive (10;. 110; 210; 310; 410) in one direction, and having a releasable freewheel (54, 58, 60, 62, 64; 214) for blocking the component (12; 212) to be rotated, **characterised in that** the angular ranges for the two adjustment directions are of different sizes, the movement of the lever (20; 120; 220; 320; 420) releasing the freewheel in the direction of the smaller angular range in order to initiate a downwardly directed adjustment of the vehicle seat by means of the force due to weight.

2. Seat height adjuster drive according to claim 1, **characterised in that** the freewheel (54, 58, 60, 62, 64; 214) can be released in two directions (10; 110; 210; 310; 410).

3. Seat height adjuster drive according to claim 2, **characterised in that** there is provided a switch (50; 150) which releases the freewheel (54, 58, 60, 62, 64) in the direction of the movement of the lever (20; 120), the switch (50; 150) co-operating with a guide track (46), which is arranged in the lever (20; 120), and moving a control disc (56) of the freewheel (54, 58, 60, 62, 64) counter to the movement of the lever (20; 120).

4. Seat height adjuster drive according to any one of claims 1 to 3, **characterised in that** a pawl (30; 130; 330; 430) is provided for driving a gear (22; 122; 222; 322; 422), which pawl (30; 130; 330; 430) can be moved by articulation to a guide bar (24; 124; 227) at least partially independently of the lever (20; 120; 220; 320; 420).

5. Seat height adjuster drive according to claim 4, **characterised in that** there is provided a friction spring (170), by which the pawl (130) can be lifted out of the gear (122) and which opens when it is carried by the guide bar (124) and closes upon contact with the pawl (130).

6. Seat height adjuster drive according to claim 2 or 3, **characterised in that** the freewheel (54, 58, 60, 62, 64; 214) can be switched between a blocked state and at least one released state by switching elements (237) which can be moved at least partially axially relative to the freewheel in order to switch the freewheel.

7. Seat height adjuster drive according to claim 6, **characterised in that** the freewheel (54, 58, 60, 62, 64; 214) is released in at least one direction of rotation by a redirection of the axial movement of the switching elements (237) into a movement in the peripheral direction.

8. Seat height adjuster drive according to claim 6 or 7, **characterised in that**, in order to initiate the axial movement of the switching elements (237), balls (233) are provided and are guided in guide tracks (229) which have a non-constant cross-section in an axial direction.

9. Seat height adjuster drive according to any one of claims 1 to 8, **characterised in that** means (347; 455) are provided for damping the movement of the seat height adjuster drive (310; 410) in at least one adjustment direction.

10. Vehicle seat (1; 201) having a height-adjustable and/or inclination-adjustable seat frame (3; 203) and a seat height adjuster drive (10; 110; 210; 310; 410) according to any one of claims 1 to 9.

## Revendications

1. Entraînement pour un système de réglage en hauteur d'un siège de véhicule, notamment destiné au siège d'un véhicule automobile, avec un levier à action manuelle (20 ; 120 ; 220 ; 320 ; 420), qui est mobile à partir d'une position de repos dans deux zones angulaires correspondant aux deux sens de réglage, pour tourner une partie (12 ; 212) de l'entraînement du système de réglage du siège en hauteur (10 ; 110 ; 210 ; 310 ; 410) dans une direction et avec une course libre à commutation libre (54, 58, 60, 62, 64 ; 214), pour bloquer la partie rotative (12 ; 212), **caractérisé par le fait que** les zones angulaires ont une dimension différente pour les deux sens de réglage, le déplacement du levier (20 ; 120 ; 220 ; 320 ; 420) en direction de la plus petite zone angulaire libérant la course libre, pour déclencher un réglage dirigé vers le bas du siège du véhicule, à l'aide de la force exercée par le poids.

2. Entraînement pour un système de réglage en hauteur d'un siège, selon la revendication 1, **caractérisé par le fait que** la course libre (54, 58, 60, 62, 64 ; 214) est librement commutable dans deux directions (10 ; 110 ; 210 ; 310 ; 410).

3. Entraînement pour un système de réglage en hauteur d'un siège, selon la revendication 2, **caractérisé par le fait qu'**un commutateur (50 ; 150) qui libère la course libre (54, 58, 60, 62, 64) en direction du déplacement du levier (20 ; 120) est prévu, le commutateur (50 ; 150) coopérant avec une glissière à coulisses (46), disposée sur le levier (20 ; 120 ) et un disque de commande (56) de la course libre (54, 58, 60, 62, 64) se déplaçant dans le sens inverse du déplacement du levier (20 ; 120).

4. Entraînement pour un système de réglage en hauteur d'un siège, selon l'une quelconque des revendications 1 à 3, **caractérisé par le fait qu'**un cliquet (30 ; 130 ; 330 ; 430) est prévu pour l'entraînement d'une roue dentée (22 ; 122 ; 222 ; 322 ; 422), qui par articulation sur un bras oscillant (24 ; 124 ; 227) est mobile au moins partiellement et de façon indépendante du levier (20 ; 120 ; 220 ; 320 ; 420).

5. Entraînement pour un système de réglage en hauteur d'un siège, selon la revendication 4, **caractérisé par le fait qu'**un ressort de friction (170), par l'intermédiaire duquel le cliquet (130) peut être relevé hors de la roue dentée (122) et qui, lors de l'entraînement par le bras oscillant (124), s'ouvre et se ferme au contact du cliquet (130), est prévu.

6. Entraînement pour un système de réglage en hauteur d'un siège, selon l'une quelconque des revendications 2 ou 3, **caractérisé par le fait que** la course libre (54, 58, 60, 62, 64 ; 214) est commutable entre un état bloqué et au moins un état de commutation libre, par l'intermédiaire des éléments de commutation (237), qui pour commuter la course libre sont mobiles au moins partiellement dans le sens de l'axe de la course libre.

7. Entraînement pour un système de réglage en hauteur d'un siège, selon la revendication 6, **caractérisé par le fait que** la course libre (54, 58, 60, 62, 64 ; 214) est libérée au moins dans un sens de rotation par un renversement du déplacement axial des éléments de commutation (237) en un déplacement en direction périphérique.

8. Entraînement pour un système de réglage en hauteur d'un siège, selon l'une quelconque des revendications 6 ou 7, **caractérisé par le fait que**, pour le déclenchement du déplacement axial des éléments de commutation (237), des sphères (233) guidées dans des glissières à coulisses (229) présentant une section transversale non constante en direction axiale, ont été prévues.

9. Entraînement pour un système de réglage en hauteur d'un siège, selon l'une quelconque des revendications 1 à 8, **caractérisé par le fait que** des moyens (347 ; 455) sont prévus pour amortir le déplacement de l'entraînement du système de réglage en hauteur du siège (310 ; 410) dans au moins un sens de réglage.

10. Siège de véhicule (1 ; 201) avec un châssis de siège (3 ; 203) réglable en hauteur et / ou à inclinaison réglable et avec un entraînement pour un système de réglage en hauteur d'un siège (10 ; 110 ; 210 ; 310 ; 410) tel que défini à l'une quelconque des revendications 1 à 9.
